# EUROPEAN PATENT SPECIFICATION

(11) **EP 2 034 217 B1**
(45) Date of publication and mention of the grant of the patent: **07.12.2011**
(21) Application number: 08162948.7
(22) Date of filing: 26.08.2008
(51) Int. Cl.: F16G 13/06

(54) **Oilless chain and method of producing oilless chain**
Ölfreie Kette und Verfahren zur Herstellung einer ölfreien Kette
Chaîne auto-lubrifiante et son procédé de fabrication

(30) Priority: 03.09.2007 JP 2007228118
(43) Date of publication of application: 11.03.2009
(73) Proprietor: Tsubakimoto Chain Co., Kita-ku Osaka 530-0005 (JP)
(72) Inventor: Kondo, Takeshi, Osaka-shi Osaka 530-0005 (JP); Andoh, Takahisa, Osaka-shi Osaka 530-0005 (JP); Takashima, Toshihiko, Osaka-shi Osaka 530-0005 (JP); Nakagawa, Ikutaro, Osaka-shi Osaka 530-0005 (JP); Nakagawa, Takashi, Osaka-shi Osaka 530-0005 (JP)
(74) Representative: von Kreisler Selting Werner

(56) References cited:
- EP-A1- 0 864 776
- JP-A- 2002 295 600
- JP-A- 2004 196 487
- JP-A- 2004 286 115
- US-A- 3 818 564
- DuPont: "DuPont Krytox performance lubricants" no. H-58510-1, September 2002 (2002-09), pages 1-2, XP002521921 Retrieved from the Internet: URL:http://www2.dupont.com/Lubricants/en_U S/assets/downloads/H58510_1.pdf> [retrieved on 2009-03-31]

## Description

### BACKGROUND

### 1. Field of the Invention

The present invention relates to an oilless chain used for power transmission mechanisms, transport mechanisms, etc. and configured such that bushings make sliding contact with pins while lubricating oil impregnated into the bushings oozes out without requiring additional lubrication, and to a method of producing the oilless chain.

### 2. Description of Related Art

Chains, such as bushing chains and roller chains, are used conventionally as power transmission mechanisms and transport mechanisms. The bushing chain is configured by alternately connecting a pair of outer plates and a pair of inner plates. The pair of outer plates is coupled each other at both ends using two pins and the pair of inner plates is coupled each other at both ends using two bushings. One of the pins of the pair of outer plates is incorporated into one of the bushings (adjacent bushing) for alternately connecting. In the case of the roller chain, rollers mounted on the bushings are further provided.

An oilless chain is known to be provided with bushings made of sintered material and impregnated with lubricating oil, which are configured to be the bushings of the above-mentioned chain, so that the bushings make sliding contact with the pins while the lubricating oil impregnated into the bushings oozes out without requiring additional lubrication.

Japanese Patent Application Laid-Open Publication No. 2004-286115 discloses an invention relating to an oilless chain in which fluorine-bonded oil having a straight-chain structure or a side-chain structure is impregnated into the bushings.

Du Pont "DuPont Krytox performance lubricants" no. H-58510-1 discloses a chemical property of Krytox that is one of the fluorine bonded oil.

### SUMMARY

As disclosed in Japanese Patent Application Laid-Open Publication No. 2004-286115, it is generally known that fluorine-bonded oil (perfluoropolyether: PFPE) is impregnated into the bushings to improve lubrication performance in high temperature ranges. In Japanese Patent Application Laid-Open Publication No. 2004-286115, PFPE is blended with polytetrafluoroethylene (PTFE) to further improve lubrication performance.

In the case that the above-mentioned lubricating oil composition is impregnated into the bushing made of sintered metal, a series of processing is carried out in which vacuuming is carried out, the bushing is immersed into the lubricating oil composition, the external air is introduced, and then the lubricating oil composition is permeated into the bushing.

The diameter of the pores of the bushings through which the lubricating oil composition flows is distributed in a range of 0.5 to 10 µm, and the average is 3 to 5 µm.
Hence, in a case that the bushing is immersed into lubricating oil composition blended with PTFE having a particle diameter larger than the diameter of the pores, there is a problem that the pores were blocked with PTFE and improper impregnation occurred. In addition, it tends to occur improper impregnations and makes concentration controls of PTFE difficult in volume-oriented production lines, because PFPE, a base oil, mainly permeated into the pores and the concentration of PTFE in the lubricating oil composition for immersing the bushings becomes high. Furthermore, since PTFE particles tend to aggregate into secondary particles, even if PTFE having a small primary particle diameter is selected, primary particles of the PTFE aggregate into secondary particles having large particle diameter, and then cause a problem similar to those described above.
Although the lubricating oil composition oozes out to the inner circumferential face of the bushing owing to pumping action arising from relative rotation between the bushing and the pin and sliding friction heat caused by the rotation, in a case that the impregnation is insufficient, amounts of the lubricating oil composition oozing out to the inner circumferential face of the bushing are reduced, the lubrication performance becomes insufficient, and then a life of the chain with respect to anti-elongation for abrasion becomes short.

In consideration of these circumstances, an object of the present invention is to provide an oilless chain in which, by adopting a configuration such that PTFE contained in a lubricating oil composition prepared by blending PFPE with PTFE has a primary particle diameter adapted to the diameter of the pores of the bushings through which the lubricating oil composition flows, a sufficient amount of the lubricating oil composition is impregnated into the bushings while the pores are not blocked with PTFE, the lubricating oil composition satisfactorily oozes out to the sliding contact face between the bushing and the pin during operation, and oil film shortage is prevented, whereby abrasion on the inner circumferential faces of the bushings and abrasion of the pins are prevented and a life of the chain with respect to anti-elongation for abrasion becomes satisfactory.

In addition, another object of the present invention is to provide an oilless chain in which, by adopting a configuration such that the primary particle diameter is 0.5 µm or less, the pores of the bushings are prevented from being blocked with PTFE even when PTFE particles aggregate into secondary particles because the primary particle diameter is sufficiently small, and the lubricating oil composition is impregnated into the bushings further satisfactorily.

Moreover, another object of the present invention is to provide a method of producing an oilless chain in which by immersing the bushings in the lubricating oil composition prepared by blending PFPE with PTFE after only PFPE is impregnated into the pores of the bushings, PFPE is satisfactorily charged into the pores and satisfactorily supplied to the sliding contact face between the bushing and the pin, the lubricating oil composition containing PTFE for preventing oil film shortage is also permeated into the pores and supplied to the sliding contact face, whereby the lubrication performance on the sliding portions is maintained satisfactorily, and the oilless chain has satisfactory life with respect to anti-elongation for abrasion.

Furthermore, another object of the present invention is to provide a method of producing an oilless chain in which, by applying the lubricating oil composition prepared by blending PFPE with PTFE to at least the inner circumferential faces of the bushings after only PFPE is impregnated into the pores of the bushings, PFPE is satisfactorily charged into the pores and satisfactorily supplied to the sliding contact face between the bushing and the pin, the lubricating oil composition containing PTFE for preventing oil film shortage is supplied to the sliding contact face, whereby the lubrication performance on the sliding portions is maintained satisfactorily, and the oilless chain has satisfactory life with respect to anti-elongation for abrasion.

An oilless chain according to a first aspect of the present invention is configured to connect alternately a pair of outer plates having two pins for coupling each other and a pair of inner plates, disposed adjacent to the pair of outer plates, having two bushings for coupling each other, by incorporating one of the pins into one of the bushings, wherein said bushings are made of sintered metal and impregnated with a lubricating oil composition, said lubricating oil composition is prepared by blending perfluoropolyether with polytetrafluoroethylene, and said polytetrafluoroethylene has a primary particle diameter adapted to a diameter of pores of said bushings through which said lubricating oil composition flows.

The primary particle diameter of polytetrafluoroethylene adapted to the diameter of the pores is a diameter smaller than the diameter of the pores. In the case that the diameter of the pores are distributed widely, the primary particle diameter is preferably smaller than the average diameter of the pores, and further preferably smaller than the minimum diameter of the pores.
Since the lubricating oil composition prepared by blending perfluoropolyether with polytetrafluoroethylene having a primary particle diameter adapted to the diameter of the pores is impregnated into the bushings in the present invention, the pores are prevented from being blocked with polytetrafluoroethylene, and the lubricating oil composition is satisfactorily impregnated into the bushings.
Hence, while oil film shortage is prevented for a long time by polytetrafluoroethylene during oilless chain operation, the lubricating oil composition is satisfactorily supplied to the sliding contact face between the bushing and the pin, and abrasion of the inner circumferential faces of the bushings and abrasion of the pins are prevented, and the life with respect to anti-elongation for abrasion is improved.

An oilless chain according to a second aspect of the present invention is characterized in that the primary particle diameter is 0.5 µm or less.

Since the primary particle diameter is 0.5 µm or less in the present invention, the primary particle diameter of polytetrafluoroethylene is sufficiently small. Even in the case that the primary particles aggregate into secondary particles, the pores of the bushings are prevented from being blocked with polytetrafluoroethylene, whereby the bushings are impregnated with the lubricating oil composition further satisfactorily.

A method of producing an oilless chain according to a third aspect of the present invention comprises the step of impregnating perfluoropolyether into bushings made of sintered metal and the step of immersing the bushings in a lubricating oil composition prepared by blending perfluoropolyether with polytetrafluoroethylene.

Since the bushings are immersed in the lubricating oil composition prepared by blending perfluoropolyether with polytetrafluoroethylene after only perfluoropolyether is impregnated into the pores of the bushings, perfluoropolyether is satisfactorily charged into the pores of the bushings, whereby it is possible to obtain an oilless chain in which a sufficient amount of perfluoropolyether is supplied satisfactorily to the sliding contact face between the bushing and the pin during operation for a long time. Furthermore, this oilless chain prevents the lubricating oil composition from excessively flowing out from the pores or the sliding portions by improving apparent viscosity, in other words, prevents oil film shortage, make the lubricating oil composition containing polytetrafluoroethylene, which acts as an extreme pressure agent and improves lubrication performance, permeate into the pores and be supplied to the sliding contact faces, whereby the lubrication performance on the sliding contact faces is maintained satisfactorily and the oilless chain has satisfactory life with respect to anti-elongation for abrasion. Since improper impregnation is prevented at the impregnation step, the concentration control of polytetrafluoroethylene is carried out easily.

A method of producing an oilless chain according to a fourth aspect of the present invention comprises the step of impregnating perfluoropolyether into bushings made of sintered metal and the step of applying a lubricating oil composition prepared by blending perfluoropolyether with polytetrafluoroethylene to at least the inner circumferential faces of the bushings.

Since the lubricating oil composition prepared by blending perfluoropolyether with polytetrafluoroethylene is applied to at least the inner circumferential faces of the bushings after only perfluoropolyether is impregnated into the pores of the bushings, perfluoropolyether is satisfactorily charged into the pores, perfluoropolyether is supplied satisfactorily to the sliding contact face between the bushing and the pin during operation for a long time. Moreover, the lubricating oil composition containing polytetrafluoroethylene, which prevents oil film shortage and improves lubrication performance, is also supplied to the sliding contact faces, and the lubrication performance on the sliding contact faces is maintained satisfactorily. Thus, it is possible to obtain an oilless chain having satisfactory life with respect to anti-elongation for abrasion. Since improper impregnation is prevented at the impregnation step, the concentration control of polytetrafluoroethylene is carried out easily.
The above and further objects and features of the invention will more fully be apparent from the following detailed description with accompanying drawings.

### BRIEF DESCRIPTION OF THE SEVERAL VIEWS OF THE DRAWINGS

FIG. 1 is a partly perspective view showing an oilless chain;
FIG. 2 is a partly perspective view showing an oilless chain according to Embodiment 1 of the present invention;
FIG. 3 is a partly perspective view showing an oilless chain;
FIG. 4 is a graph showing the relationship between the operation time ratio and the abrasion elongation amount at an ambient temperature of 150°C; and
FIG. 5 is a graph showing the relationship between the operation time ratio and the abrasion elongation amount at an ambient temperature of 250°C.

### DETAILED DESCRIPTION

The present invention will be described below specifically on the basis of the drawings showing embodiments thereof.

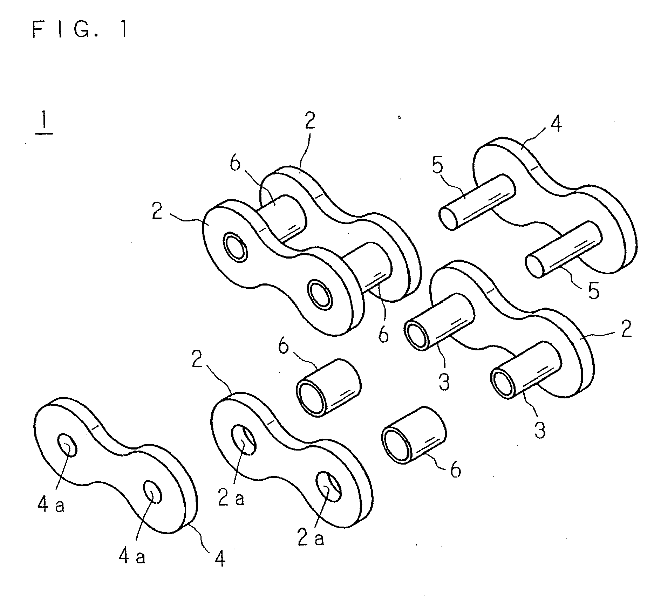

FIG. 1 is a partly perspective view showing an oilless chain 1.

The inner plate 2 and the outer plate 4 of the oilless chain 1 have a nearly figure-eight shape in which a circular arc portion depressed inwardly is formed on each side fringe at the central portion of an elliptical flat member and holes 2a and 2a and holes 4a and 4a are respectively provided near the two poles of the elliptical flat member. A plate width and a diameter of the provided holes of the inner plate 2 are larger than those of the outer plate 4. The two poles 2a and 2a of the inner plate 2 are tightly fitted with one ends of cylindrical bushings 3 and 3, respectively, and the other ends of the cylindrical bushings 3 and 3 are also tightly fitted into the holes 2a and 2a of the other inner plate 2, respectively, whereby the inner plates 2 and 2 are coupled each other. The bushings 3 and 3 are rotatably fitted with cylindrical rollers 6 and 6 whose inside diameters are larger than the outside diameters of the bushings 3 and 3.

The two holes 4a and 4a of the outer plate 4 are tightly fitted with one ends of cylindrical pins 5 and 5, respectively. A diameter of the pins 5 and 5 is smaller than the inside diameter of the bushings 3 and 3, and a length of the pins 5 and 5 is longer than a distance between the inner plates 2 and 2. The other ends of the pins 5 and 5 are also tightly fitted into the holes 4a and 4a of the other outer plate 4, whereby the outer plates 4 and 4 are coupled each other.

In addition, one of the pins 5 and 5 fitted into one of the outer plates 4 is inserted into one of the bushings 3 and 3 of the inner plates 2 and 2 and tightly fitted into the hole 4a of the other outer plate 4, whereby the outer plates 4 and 4 and the inner plates 2 and 2 are connected alternately and the oilless chain 1 is configured.

The bushing 3 is made of ferrous sintered metal and has numerous pores. The pores are classified into pores formed in sintered grains themselves and pores which have larger diameter than the pores formed in sintered grains themselves and permit flow of lubricating oil composition described later. The diameter of the pores through which the lubricating oil composition flows is distributed in a range of 0.5 to 10 µm, and the average is 3 to 5 µm.

A base oil of the lubricating oil compositions is PFPE (perfluoropolyether). Since PFPE is composed of carbon, oxygen and fluorine atoms and does not contain hydrogen or chlorine atoms at all, it is extremely excellent in heat resistance at high temperatures and in oxidation resistance, has low vapor pressure and hardly evaporates even under high vacuum. Examples of structural formulas of PFPEs are represented by chemical constitution formulas 1 to 5 shown below.

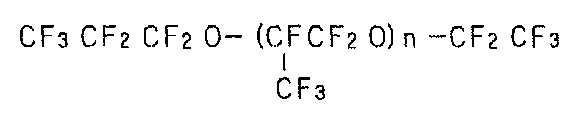

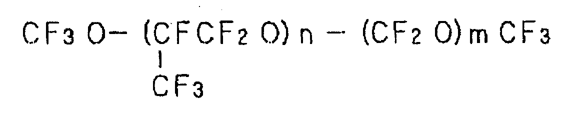

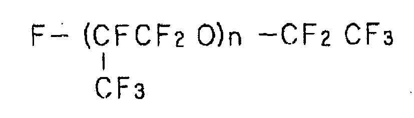

CF₃O-(CF₂CF₂O)n-(CF₂O)mCF₃

F-(CF₂CF₂CF₂O)n-CF₂CF₃

PFPEs represented by chemical formulas 4 and 5 have a straight-chain structure and PFPEs represented by chemical formulas 1 to 3 have a side-chain structure. PFPEs having a straight-chain structure are generally high in molecular binding strength at high temperatures and excellent in thermal stability but expensive. PFPEs having a side-chain structure are generally high in kinematic viscosity and prevented from excessively flowing out from the pores of the bushings 3 or sliding portions, whereby oil film shortage is prevented. It is thus preferable that a PFPE having a side-chain structure should be used or that a PFPE having a side-chain structure should be blended with a PFPE having a straight-chain structure. It is preferable that the ratio of the PFPE having a side-chain structure in the total weight of the PFPEs should be 50 to 100 wt%.

A lubricating oil composition is prepared by blending PFPE with PTFE (polytetrafluoroethylene). Since the PTFE improves apparent viscosity, prevents the lubricating oil composition from excessively flowing out from the pores of the bushings 3, prevents the lubricating oil composition from excessively flowing out from the sliding portions, prevents oil film shortage, and acts as an extreme pressure agent, lubrication performance of the lubricating oil composition is improved. It is preferable that the lubricating oil composition contains 2 to 5 wt% of PTFE with respect to the total weight.
A primary particle diameter of PTFE is preferably smaller than the diameter of the pores of the bushing 3, further preferably smaller than the average diameter of the pores because the distribution of the diameter of the pores is wide as described above, and still further preferably smaller than a minimum diameter of the pores. More specifically, the primary particle diameter of PTFE is preferably 0.5 µm or less.
For example, in a case that the average primary particle diameter of PTFE is 0.1 µm, when the primary particles aggregate into secondary particles, the diameter of the secondary particles is approximately 2 µm. In a case that the primary particle diameter thereof is 0.2 µm, when the primary particles aggregate into secondary particles, the diameter of the secondary particles is approximately 3 µm. Hence, the diameter is smaller than the average diameter of the pores.

A method of producing the bushing 3 is described below.
In a case that a lubricating oil composition is impregnated into the bushing 3, a series of processing is carried out in which vacuuming is carried out, the bushing 3 is immersed in the lubricating oil composition prepared by blending PFPE with PTFE, an external air is introduced, and then the lubricating oil composition is permeated into the bushing 3. Alternatively, it may be possible that after the bushing 3 is immersed in the lubricating oil composition, vacuuming is carried out, the external air is introduced, and then the lubricating oil composition is permeated into the bushing 3. The processing temperature is approximately 100 to 150°C. At this time, the primary particle diameter of PTFE is preferably smaller than the minimum diameter of the pores as described above to prevent the pores from being blocked with the PTFE particles. More specifically, the diameter is preferably 0.5 µm or less.

In the case that the lubricating oil composition is impregnated into the bushing 3, the impregnation is preferably carried out in two steps as described below.
Firstly, PFPE is impregnated into the bushing 3. Vacuuming is carried out, the bushing 3 is immersed in PFPE, the external air is introduced, and then PFPE is permeated into the bushing 3, in a way similar to that described above. Alternatively, after the bushing 3 is immersed in PFPE, vacuuming is carried out, the external air is introduced, and then PFPE is permeated into the bushing 3.
Secondly, the bushing 3 is immersed in the lubricating oil composition prepared by blending PFPE with PTFE.
Since the impregnation is carried out in two steps, PFPE is satisfactorily charged into the pores of the bushing 3. Thus, PFPE oozes out from the pores, and then PFPE is supplied satisfactorily to the sliding contact faces between the bushing 3 and the pin 5 during operation of the oilless chain for a long time. Furthermore, since the lubricating oil composition containing PTFE is also permeated into the pores and supplied to the sliding contact faces, it prevents the lubricating oil composition from excessively flowing out from the pores, also prevents from excessively flowing out from sliding portions, and prevents oil film shortage. Thus, it satisfactorily maintains the lubrication performance on the sliding contact faces.

Alternatively, it may be possible that after the bushing 3 is immersed in PFPE, the lubricating oil composition prepared by blending PFPE with PTFE is applied to at least the inner circumferential face of the bushing 3. The application is carried out by using an ordinary method. Since the lubricating oil composition containing PTFE is also supplied to the sliding contact face between the bushing 3 and the pin 5, the lubrication performance on the sliding contact face is maintained properly. It may also be possible that the lubricating oil composition is applied to the outer circumferential face of the bushing 3. With this application, the outer circumferential face of the bushing 3 and the roller 6 are prevented from abrasion.
In the case that, after PFPE is impregnated into the bushing 3, the bushing 3 is immersed in the lubricating oil composition prepared by blending PFPE with PTFE, or in the case that, after PFPE is impregnated into the bushing 3, the lubricating oil composition is applied to at least the inner circumferential face of the bushing 3, PFPE can be satisfactorily impregnated into the pores of the bushing 3 without the pores being blocked with PTFE in the beginning of each case. Hence, it is possible to use PTFE particles having a diameter larger than that in a case that the lubricating oil composition prepared by blending PFPE with PTFE is impregnated from the beginning. However, the pores may be blocked with PTFE in the case that the lubricating oil composition is supplied from the pores to the sliding contact face during operation of the oilless chain 1. Thus, the particle diameter of PTFE is preferably smaller than the minimum diameter of the pores. More specifically, the diameter is preferably 0.5 µm or less.

Using the bushings 3 obtained as described above, the oilless chain 1 having the above-mentioned configuration is produced.

In this embodiment, PFPE is satisfactorily impregnated into the pores of the bushing 3, a sufficient amount of PFPE is supplied to the sliding contact face between the bushing 3 and the pin 5 for a long time, oil film shortage is prevented, and PTFE for improving lubrication performance is also supplied to the sliding contact face, whereby the lubrication performance on the sliding contact face is maintained satisfactorily, abrasion is prevented without resupply of additional lubrication, and abrasion-resistant elongation life of the oilless chain 1 is improved. In particular, the abrasion-resistant elongation life at ambient temperatures of 150 to 250°C is improved.

### (Embodiment 1)

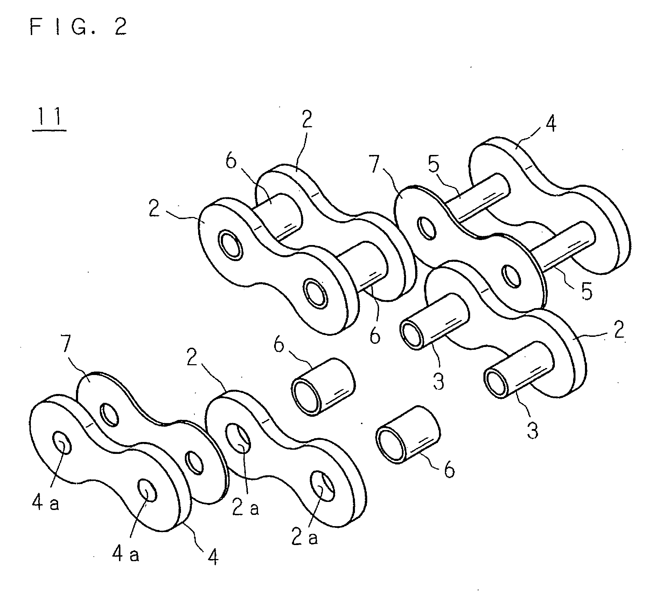

FIG. 2 is a partly perspective view showing an oilless chain 11 according to Embodiment 1 of the present invention. In the figure, the same components as those shown in FIG. 1 are designated by the same numerals and their detailed descriptions are omitted.
The oilless chain 11 according to this embodiment differs from the oilless chain 1 according to FIG. 1 in that the inner faces of the outer plates 4 and 4 are made contact with sealing members 7 and 7 having a shape nearly the same as that of the outer plates 4 and 4. The sealing members 7 and 7 are felt-like members made of PTFE and permeated with PFPE.

In this embodiment, as in the case of FIG. 1, a lubricating oil composition prepared by blending PFPE with PTFE is impregnated into the pores of the bushing 3, and the lubricating oil composition is supplied to the inner circumferential face of the bushing 3, whereby the lubrication performance on the sliding contact face between the bushing 3 and the pin 5 is maintained satisfactorily for a long time. In addition, the sealing members 7 and 7 prevents the lubricating oil composition from flowing out from a portion between the bushing 3 and the pin 5, and the sealing members 7 and 7 also supply PFPE, whereby the lubrication performance is further improved and the abrasion-resistant elongation life is further improved.

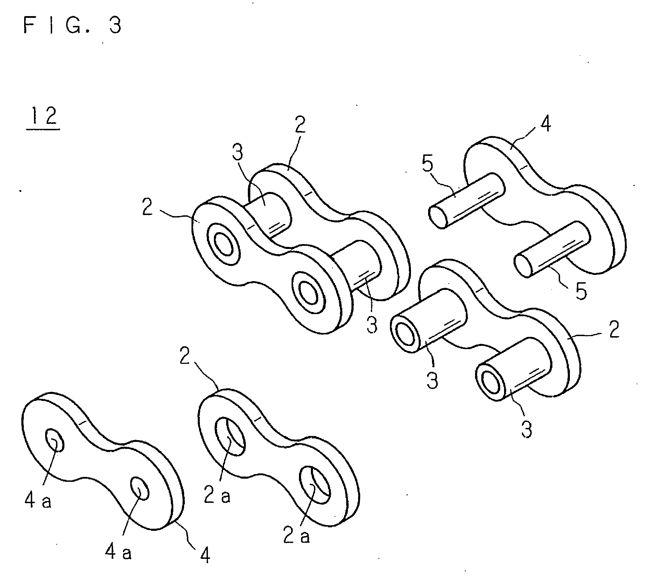

FIG. 3 is a partly perspective view showing an oilless chain 12. In the figure, the same components as those shown in FIG. 1 are designated by the same numerals and their detailed descriptions are omitted.
The oilless chain 12 according to this embodiment differs from the oilless chain 1 according to FIG. 1 in that the rollers 6 and 6 are not provided.

In this embodiment, as in the case of FIG. 1, a lubricating oil composition prepared by blending PFPE with PTFE is impregnated into the pores of the bushing 3, and the lubricating oil composition is supplied to the inner circumferential face of the bushing 3, whereby the lubrication performance on the sliding contact face between the bushing 3 and the pin 5 is maintained satisfactorily for a long time and the abrasion-resistant elongation life under high temperatures is improved.

### [Examples]

### (example 1)

The oilless chain 1 according to FIG. 1 described above was produced as example 1.
As a base oil, PFPE, of the lubricating oil composition to be impregnated into the bushings 3 of the oilless chain 1, "GPL 107" (kinematic viscosity at 40°C: 440 mm²/s) produced by DuPont Corporation was used. PTFE having an average primary particle diameter of 0.1 µm and having an average secondary particle diameter of 2 µm was used.
The lubricating oil composition was obtained by blending the PFPE with PTFE so that the content of the PTFE in the lubricating oil composition becomes approximately 2 wt%. The bushing 3 was immersed in the lubricating oil composition, and the lubricating oil composition was impregnated into the pores of the bushing 3. The oilless chain 1 according to example 1 was produced with use of the bushings 3 impregnated with the lubricating oil composition as described above.

### (Comparative example 1)

An oilless chain according to Comparative example 1 was produced in a way similar to that in example 1, except that only PFPE was impregnated into the bushings 3.

### (Comparative example 2)

An oilless chain according to Comparative example 2 was produced in a way similar to that in example 1, except that PTFE having an average primary particle diameter of 10 µm was used and that, after the PFPE was impregnated into the bushing 3, the bushing 3 was immersed in the lubricating oil composition prepared by blending PFPE with PTFE so as to be impregnated with the lubricating oil composition.

To evaluate the abrasion-resistant elongation lives of the oilless chains according to example 1, Comparative example 1 and Comparative example 2, abrasion elongation amounts of the oilless chains were measured at ambient temperatures of 150°C and 250°C.
Each oilless chain was endlessly linked over two sprockets (the number of teeth: 16T, revolution speed: 500 r/min) and subjected to operation tests at a transmission power of 6.33 kW in the case of an ambient temperature of 150°C and at a transmission power of 3.17 kW in the case of an ambient temperature of 250°C.

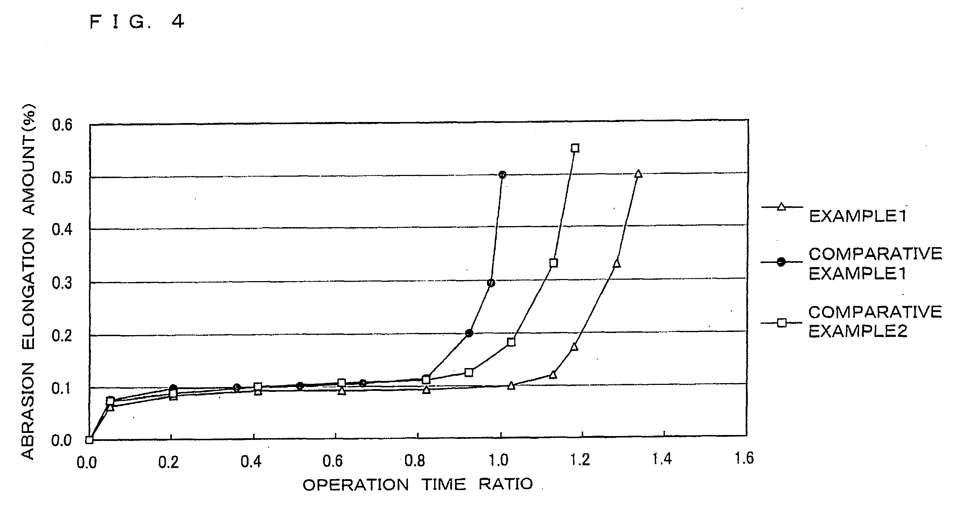

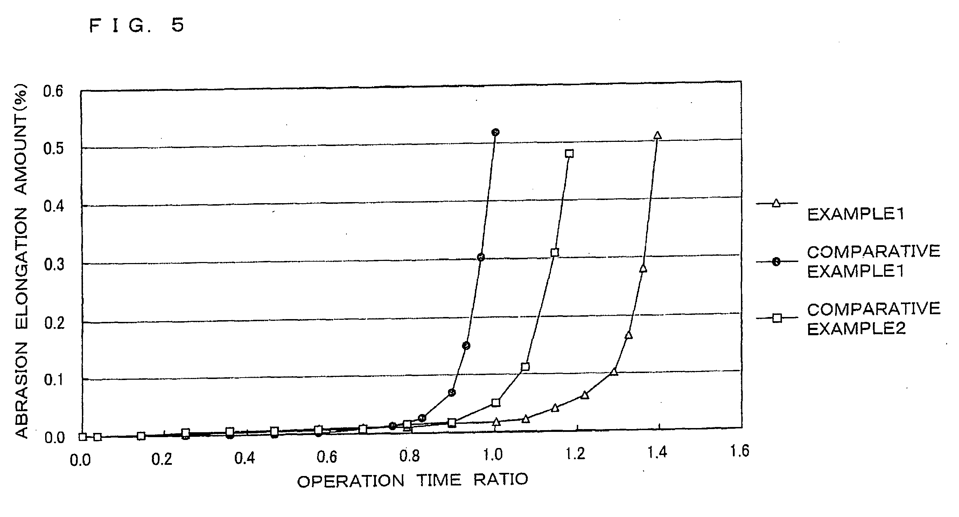

FIG. 4 is a graph showing a relationship between operation time ratio and abrasion elongation amount at an ambient temperature of 150°C, and FIG. 5 is a graph showing the relationship between the operation time ratio and the abrasion elongation amount at an ambient temperature of 250°C. In each graph, the operation time ratio is set at 1 when the abrasion elongation amount of Comparative example 1 is 0.5%.

As shown in FIG. 4, in the test conducted at an ambient temperature of 150°C, it is found that the abrasion-resistant elongation life of the oilless chain according to Comparative example 2 is improved approximately 17% more than that of the oilless chain according to Comparative example 1 and that the abrasion-resistant elongation life of the oilless chain 1 according to example 1 is improved approximately 33% more than that of the oilless chain according to Comparative example 1.
Furthermore, as shown in FIG. 5, in the test conducted at an ambient temperature of 250°C, it is found that the abrasion-resistant elongation life of the oilless chain according to Comparative example 2 is improved approximately 19% more than that of the oilless chain according to Comparative example 1 and that the abrasion-resistant elongation life of the oilless chain 1 according to example 1 is improved approximately 40% more than that of the oilless chain according to Comparative example 1.
As a result, it has been confirmed that the abrasion-resistant elongation life is dramatically improved in the case of the oilless chain 1 according to FIG. 1 in which the lubricating oil composition prepared by blending PFPE with PTFE having a particle diameter smaller than the diameter of the pores of the bushings 3 is impregnated into the bushings 3.

## Claims

1. An oilless chain (1, 11, 12) alternately connecting a pair of outer plates (4, 4) having two pins (5, 5) for coupling each other and a pair of inner plates (2, 2), disposed adjacent to the pair of outer plates (4, 4), having two bushings (3, 3) for coupling each other, by incorporating one of the pins (5) into one of the bushings (3), wherein said bushings (3) are made of sintered metal and impregnated with a lubricating oil composition, and wherein a diameter of pores of the bushings(3) through which the lubricating oil composition flows is distributed in a range of 0.5 to 10 µm wherein said lubricating oil composition is prepared by blending perfluoropolyether with polytetrafluoroethylene, **characterized by** comprising:
a pair of sealing members (7, 7) that are felt-like members made of polytetrafluoroethylene and permeated with PFPE, wherein each of said sealing members (7, 7) is made contact with an inner face of each of said outer plates (4, 4);
said polytetrafluoroethylene blended into said lubricating oil composition has a primary particle diameter adapted to a diameter of pores of said bushings (3, 3) through which said lubricating oil composition flows;
and said primary particle diameter is 0.5 µm or less.

2. A method of producing an oilless chain (1, 11, 12) alternately connecting a pair of outer plates (4, 4) having two pins (5, 5) for coupling each other and a pair of inner plates (2, 2), disposed adjacent to the pair of outer plates (4, 4), having two bushings (3, 3) for coupling each other, by incorporating one of the pins (5) into one of the bushings (3), wherein said bushings (3) are made of sintered metal and impregnated with a lubricating oil composition, the method comprising:
a step of impregnating perfluoropolyether into said bushings (3); and
a step of immersing said bushings (3) in a lubricating oil composition prepared by blending perfluoropolyether with polytetrafluoroethylene, after the step of impregnating.

3. A method of producing an oilless chain (1, 11, 12) alternately connecting a pair of outer plates (4, 4) having two pins (5, 5) for coupling each other and a pair of inner plates (2, 2), disposed adjacent to the pair of outer plates (4, 4), having two bushings (3, 3) for coupling each other, by incorporating one of the pins (5) into one of the bushings (3), wherein said bushings (3) are made of sintered metal and impregnated with a lubricating oil composition, the method comprising:
a step of impregnating perfluoropolyether into said bushings (3); and
a step of applying a lubricating oil composition prepared by blending perfluoropolyether with polytetrafluoroethylene to at least inner circumferential faces of said bushings (3), after the step of impregnating.

## Patentansprüche

1. Ölfreie Kette (1,11,12), bei welcher abwechselnd zwei äußere Platten (4, 4), welche zwei Stifte (5, 5) zum Verbinden derselben aufweisen, und zwei, den beiden äußeren Platten (4, 4) benachbart angeordnete innere Platten (2,2), welche zwei Buchsen (3,3) zum Verbinden derselben aufweisen, durch Einsetzen eines der Stifte (5) in eine der Buchsen (3) miteinander verbunden sind, wobei die Buchsen (3) aus gesintertem Metall bestehen und mit einer Schmierölzusammensetzung imprägniert sind, und wobei die Durchmesser der Poren der Buchsen (3), durch welche die Schmierölzusammensetzung fließt, über einen Bereich von 0,5 bis 10 µm verteilt sind, wobei die Schmierölzusammensetzung durch das Mischen von Perfluorpolyether und Polytetrafluorethylen hergestellt ist, **dadurch gekennzeichnet, dass** sie aufweist:
zwei Dichtteile (7, 7), bei welchen es sich um filzartige Teile handelt, die aus Polytetrafluorethylen hergestellt und von PFPE durchdrungen sind, wobei jedes der Dichtteile (7, 7) an einer Innenseite jeder der äußeren Platten (4,4) anliegt;
wobei das in die Schmierölzusammensetzung gemischte Polytetrafluorethylen einen primären Partikeldurchmesser aufweist, der an den Durchmesser von Poren der Buchsen (3, 3) angepasst ist, durch welche die Schmierölzusammensetzung fließt;
und wobei der primäre Partikeldurchmesser 0,5 µm oder kleiner ist.

2. Verfahren zur Herstellung einer ölfreien Kette (1, 11, 12), bei welcher abwechselnd zwei äußere Platten (4, 4), welche zwei Stifte (5, 5) zum Verbinden derselben aufweisen, und zwei, den beiden äußeren Platten (4, 4) benachbart angeordnete innere Platten (2,2), welche zwei Buchsen (3,3) zum Verbinden derselben aufweisen, durch Einsetzen eines der Stifte (5) in eine der Buchsen (3) miteinander verbunden sind, wobei die Buchsen (3) aus gesintertem Metall bestehen und mit einer Schmierölzusammensetzung imprägniert sind, wobei das Verfahren aufweist:
einen Schritt des Imprägnierens der Buchsen (3) mit Perfluorpolyether; und
einen nach dem Schritt des Imprägnierens erfolgenden Schritt des Eintauchens der Buchsen (3) in eine Schmierölzusammensetzung, welche durch das Mischen von Perfluorpolyether und Polytetrafluorethylen hergestellt wird.

3. Verfahren zur Herstellung einer ölfreien Kette (1, 11, 12), bei welcher abwechselnd zwei äußere Platten (4, 4), welche zwei Stifte (5, 5) zum Verbinden derselben aufweisen, und zwei, den beiden äußeren Platten (4, 4) benachbart angeordnete innere Platten (2,2), welche zwei Buchsen (3,3) zum Verbinden derselben aufweisen, durch Einsetzen eines der Stifte (5) in eine der Buchsen (3) miteinander verbunden sind, wobei die Buchsen (3) aus gesintertem Metall bestehen und mit einer Schmierölzusammensetzung imprägniert sind, wobei das Verfahren aufweist:
einen Schritt des Imprägnierens der Buchsen (3) mit Perfluorpolyether; und
einen nach dem Schritt des Imprägnierens erfolgenden Schritt des Aufbringens einer Schmierölzusammensetzung, welche durch das Mischen von Perfluorpolyether und Polytetrafluorethylen hergestellt wird, auf zumindest die Innenumfangsflächen der Buchsen (3).

## Revendications

1. Chaine sans huile (1, 11, 12), dans laquelle sont connectées en alternance deux plaques externes (4, 4) comprenant deux goupilles (5, 5) pour lier l'une à l'autre, et deux plaques internes (2, 2) disposées adjacentes aux deux plaques externes (4, 4) et comprenant deux bagues (3, 3) pour lier l'une à l'autre, ladite connexion étant obtenue par insertion d'une des goupilles (5) dans une des bagues (3), lesdites bagues (3) étant fabriquées de métal fritté et imprégnées d'une composition d'huile lubrifiante, et le diamètre de pores desdites bagues (3) à travers lesquelles s'écoule ladite composition d'huile lubrifiante étant distribué dans une gamme allant de 0,5 à 10 µm, ladite composition d'huile lubrifiante étant préparée par mélanger de perfluoropolyéther et de polytétrafluoréthylène, **caractérisé en ce qu'**elle comprend:
deux éléments d'étanchéité (7, 7) qui sont des éléments de feutre fabriqués de polytétrafluoréthylène et imprégné de PFPE, chaque élément d'étanchéité (7, 7) étant en contact avec une face interne de chaque plaque externe (4, 4);
ledit polytétrafluoréthylène mélangé dans ladite composition d'huile lubrifiante ayant un diamètre de particules primaire adapté au diamètre des pores desdites bagues (3, 3) à travers lesquelles s'écoule ladite composition d'huile lubrifiante;
et ledit diamètre de particules primaire est 0,5 µm ou inférieur.

2. Procédé de fabrication d'une chaine sans huile (1, 11, 12), dans laquelle sont connectées en alternance deux plaques externes (4, 4) comprenant deux goupilles (5, 5) pour lier l'une à l'autre, et deux plaques internes (2, 2) disposées adjacentes aux deux plaques externes (4, 4) et comprenant deux bagues (3, 3) pour lier l'une à l'autre, ladite connexion étant obtenue par insertion d'une des goupilles (5) dans une des bagues (3), lesdites bagues (3) étant fabriquées de métal fritté et imprégnées d'une composition d'huile lubrifiante, ledit procédé comprenant:
l'étape d'imprégner les bagues (3) de perfluorpolyéther; et
après l'étape d'imprégnation, l'étape d'immerger lesdites bagues (3) dans une composition d'huile lubrifiante préparée par mélanger de perfluoropolyéther et de polytétrafluoréthylène.

3. Procédé de fabrication d'une chaine sans huile (1, 11, 12), dans laquelle sont connectées en alternance deux plaques externes (4, 4) comprenant deux goupilles (5, 5) pour lier l'une à l'autre, et deux plaques internes (2, 2) disposées adjacentes aux deux plaques externes (4, 4) et comprenant deux bagues (3, 3) pour lier l'une à l'autre, ladite connexion étant obtenue par insertion d'une des goupilles (5) dans une des bagues (3), lesdites bagues (3) étant fabriquées de métal fritté et imprégnées d'une composition d'huile lubrifiante, ledit procédé comprenant:
l'étape d'imprégner les bagues (3) de perfluorpolyéther; et
après l'étape d'imprégnation, l'étape d'appliquer une composition d'huile lubrifiante, préparée par mélanger de perfluoropolyéther et de polytétrafluoréthylène, au moins sur les faces circonférentielles internes desdites bagues (3).
